(19) Europäisches Patentamt / European Patent Office / Office européen des brevets

(11) EP 4 559 990 A1

(12) **EUROPEAN PATENT APPLICATION**

(43) Date of publication:
**28.05.2025 Bulletin 2025/22**

(21) Application number: **23218020.8**

(22) Date of filing: **19.12.2023**

(51) International Patent Classification (IPC):
***C09K 5/10*** *(2006.01)* ***H01M 10/613*** *(2014.01)*
***H01M 10/625*** *(2014.01)*

(52) Cooperative Patent Classification (CPC):
**C09K 5/10; H01M 10/613; H01M 10/625**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.11.2023 US 202363601295 P**

(71) Applicant: **LANXESS Corporation**
**Pittsburgh, PA 15275-1112 (US)**

(72) Inventor: **BENANTI, Travis**
**Farmington, 06032 (US)**

(74) Representative: **Siegers, Britta**
**c/o Lanxess Deutschland GmbH**
**LEX-IP**
**Kennedyplatz 1**
**50569 Köln (DE)**

Remarks:
The application is published incomplete as filed (Rule 68(1) EPC).

(54) **ESTER-FLUOROCARBON MIXTURES AS EFFICIENT HEAT TRANSFER FLUIDS**

(57) A heat transfer fluid for immersion cooling of electrical componentry includes a mixture of polyol esters and fluorocarbons. Also disclosed are single- and two-phase immersion cooling systems employing the heat transfer fluid and methods of cooling electrical componentry using the immersion cooling systems. The mixture of polyol esters and fluorocarbons of the present disclosure exhibits favorable properties in a circulating immersion cooling system, such as low flammability, low pour point, high electrical resistivity, and low viscosity for pumpability. The disclosed heat transfer fluid components are miscible over useful temperature ranges.

EP 4 559 990 A1

## Description

The present disclosure relates to heat transfer fluids for immersion cooling of electrical componentry and immersion cooling systems employing the heat transfer fluid. The heat transfer fluid comprises a mixture of esters and fluorocarbons, as described herein, and exhibits favorable properties, such as low pour point, high electrical resistivity, and low viscosity for pumpability.

BACKGROUND OF THE INVENTION

Electrical componentry that use, store and/or generate energy or power can generate heat. For example, battery cells, such as lithium-ion batteries, generate large amounts of heat during fast charging and discharging operations. Computer equipment (central processing units, graphical processing units, cryptocurrency miners, storage devices, power supplies, etc.) release heat during use, especially when under high computational loads.

Traditional thermal management systems for computer and electrical equipment employ air cooling or indirect (non-contact) liquid cooling. For example, air cooling simply uses a fan to circulate air across electrical components to remove heat. For indirect liquid cooling, commonly, water/glycol solutions are used as heat transfer fluids to dissipate heat as the fluid flows through channels, tubes, or plates that are in close contact with electrical components that generate heat. Both of these traditional cooling techniques have limitations. Fans are noisy, consume electricity, and require large heat sinks to transfer heat from the components to the air. Indirect liquid cooling cannot uniformly cool components having complex shapes, leading to hot spots and thermal stress.

Cooling by immersing electrical equipment (batteries or various computer componentry) into a liquid is an alternative to traditional cooling systems. Immersion cooling provides better heat transfer, more uniform component temperatures, and cleaner systems. For example, WO 2022084599 A1 discloses a battery assembly comprising an enclosure that include energy storage cells immersed in a heat transfer composition. As the heat transfer composition, at least one refrigerant fluid and at least one dielectric fluid are mentioned. However, the refrigerant fluids contemplated are designed to be used in a compression-expansion system for air conditioners.

CN 114106787A discloses a cooling medium composition that may be used in immersion cooling of electronic equipment. The cooling medium composition may include low-viscosity synthetic base oil in combination with a fluorinated liquid, a silane coupling agent, an antioxidant, a metal deactivator, a dispersant and a flame retardant. The cooling medium composition includes the use of adipate esters. However, an adipate ester exhibits phase separation rendering it unsuitable.

US2017/0325355 A1 discloses a method of cooling of electronic components where the electronic components are immersed in a heat transfer fluid. The heat transfer fluid may remove heat from electronic components by convection and evaporation. As the heat transfer fluid, a dielectric fluid is mentioned.

US 2018/0233791 A1 discloses a battery pack system to inhibit thermal runaway wherein a battery module is at least partially immersed in a coolant in a battery box. The coolant may be pumped out of the battery box, through a heat exchanger, and back into the battery box. As the coolant, trimethyl phosphate and tripropyl phosphate are mentioned, among other chemistries. However, a trimethyl phosphate fluid or tripropyl phosphate fluid exhibits a low direct-current (DC) resistivity, and each exhibits a low flash point such that the flammability of each fluid renders it unsuitable.

A need exists for the development of heat transfer fluids, particularly for immersion cooling systems, having lower density, higher thermal conductivity, and improved environmental profiles compared to fluorocarbons alone.

To fulfill this need, new heat transfer fluids are disclosed herein comprising certain mixtures of esters and fluorocarbons. Also disclosed are immersion cooling systems using the presently disclosed heat transfer fluids.

SUMMARY OF THE INVENTION

In accordance with the present disclosure, a heat transfer fluid for immersion cooling of electrical componentry comprises

(a) one or more than one polyol ester of formula (I-a, I-b, I-c, I-d)

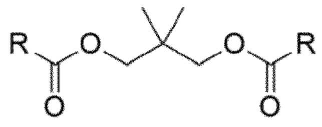

I-a

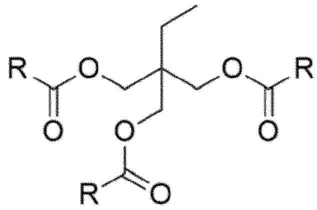

I-b

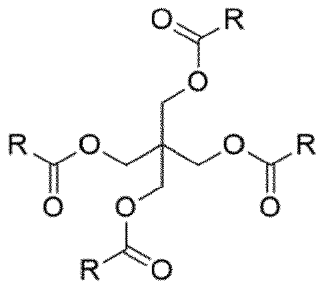

I-c

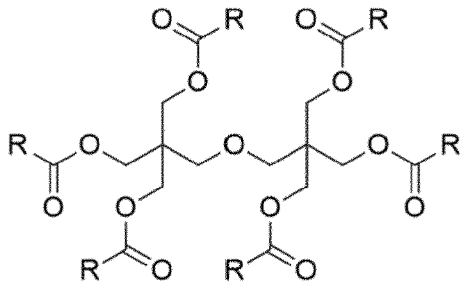

I-d

where each R is independently $C_{3-9}$ alkyl, and
(b) one or more than one fluorocarbon of formula (II)

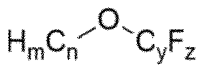
(II),

where $C_nH_m$ and $C_yF_z$ are independently chosen hydrocarbon and fluorocarbon moieties, respectively.

In many embodiments, component (b) may be one or more than one fluorocarbon of formula (II-a, II-b)

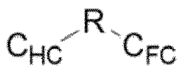

II-a

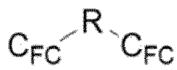

II-b

where $C_{HC}$ and $C_{FC}$ are independently chosen hydrocarbon and fluorocarbon moieties, respectively, and R is an oxygen atom or a carbonyl functional group.

In some embodiments, component (b) may be one or more than one fluorocarbons containing 4 or more carbon atoms, 7 or more fluorine atoms, and that is a liquid at atmospheric pressure and a temperature of 0°C, 10°C, 20°C, 25°C.

In yet other embodiments, component (b) may be a mixture of one or more than one fluorocarbon of formula (II)

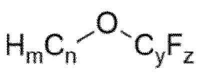
(II),

where $C_nH_m$ and $C_yF_z$ are independently chosen hydrocarbon and fluorocarbon moieties, respectively, and/or one or more than one fluorocarbon of formula (II-a, II-b)

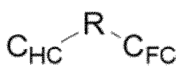

II-a

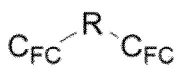

II-b

where $C_{HC}$ and $C_{FC}$ are independently chosen hydrocarbon and fluorocarbon moieties, respectively, and R is an oxygen

atom or a carbonyl functional group,
and/or one or more than one fluorocarbons containing 4 or more carbon atoms, 7 or more fluorine atoms, and that is a liquid at atmospheric pressure and a temperature of 0°C, 10°C, 20°C, 25°C.

In some embodiments, component (b) may be a mixture of one or more than one fluorocarbon of formula (II) (II), where CnHm and CyFz are independently chosen hydrocarbon and fluorocarbon moieties, respectively,
and/or one or more than one fluorocarbon of formula (II-a)

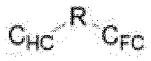

II-a

where CHC and CFC are independently chosen hydrocarbon and fluorocarbon moieties, respectively, and R is a carbonyl functional group,
and/or one or more than one fluorocarbon of formula (II-b)

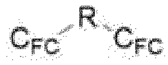

II-b

where $C_{HC}$ and $C_{FC}$ are independently chosen hydrocarbon and fluorocarbon moieties, respectively, and R is an oxygen atom or a carbonyl functional group,
and/or one or more than one fluorocarbons containing 4 or more carbon atoms, 7 or more fluorine atoms, and that is a liquid at atmospheric pressure and a temperature of 0°C, 10°C, 20°C, 25°C.

Also disclosed is an immersion cooling system comprising electrical componentry, a heat transfer fluid of the present disclosure, and a reservoir, wherein the electrical componentry is at least partially immersed in the heat transfer fluid within the reservoir. Optionally, the disclosed immersion cooling system comprises a circulating system capable of circulating the heat transfer fluid out of the reservoir, through a circulating pipeline and/or heat exchanger, and back into the reservoir. Optionally, the disclosed immersion cooling system comprises a condenser located in the vapor space of the immersion cooling system. The condenser functions to extract heat energy from volatilized portions of the heat transfer fluid, thereby condensing the gas/vapors and returning them, in a liquid phase, to the reservoir.

The present disclosure also includes a method of cooling electrical componentry comprising at least partially immersing electrical componentry in a heat transfer fluid of the present disclosure within a reservoir, and circulating the heat transfer fluid out of the reservoir, through a circulating pipeline and/or heat exchanger of a circulation system, and back into the reservoir. Optionally, the present disclosure includes a method of cooling the components by transferring heat energy to a condensing system located in the vapor space of the immersion cooling system. The condenser functions to extract heat energy from the volatilized portions of the heat transfer fluid, thereby condensing the gas/vapors and returning them, in a liquid phase, to the reservoir while rejecting heat energy to another medium (e.g., air or a second heat transfer fluid).

The heat transfer fluid, system, and method of the present disclosure are suitable for cooling a wide variety of electrical componentry, particularly battery systems and computer equipment. The preceding summary is not intended to restrict in any way the scope of the claimed invention. In addition, it is to be understood that both the foregoing general description and the following detailed description are exemplary and explanatory only and are not restrictive of the invention, as claimed.

BRIEF DESCRIPTION OF THE FIGURES

FIG. 1 is a schematic diagram of an exemplary single-phase immersion cooling system according to the present disclosure.

FIG. 2 is a schematic diagram of an exemplary two-phase immersion cooling system according to the present disclosure.

DETAILED DESCRIPTION OF THE INVENTION

Unless otherwise specified, the word "a" or "an" in this application means "one or more than one".

A heat transfer fluid for immersion cooling of electrical componentry comprises

(a) one or more than one polyol ester of formula (I-a, I-b, I-c, I-d)

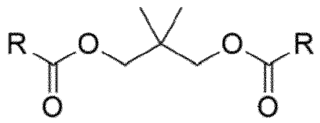

I-a

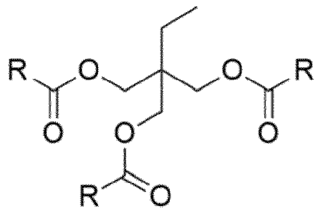

I-b

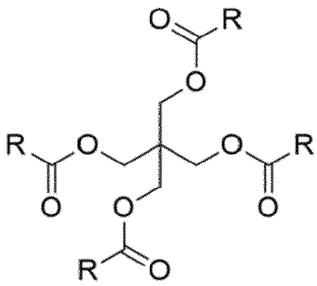

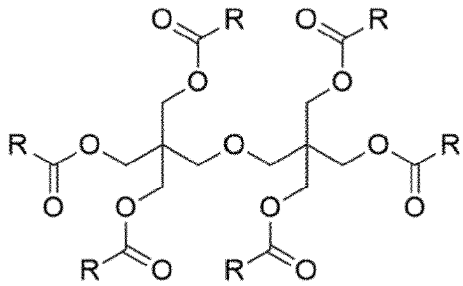

I-c I-d

where each R is independently $C_{3\text{-}9}$ alkyl, and
(b) one or more than one fluorocarbon of formula (II)

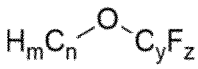 (II),

where $C_nH_m$ and $C_yF_z$ are independently chosen hydrocarbon and fluorocarbon moieties, respectively.

In many embodiments, component (b) may be one or more than one fluorocarbon of formula (II-a, II-b)

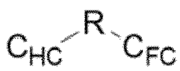

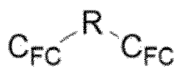

II-a II-b

where $C_{HC}$ and $C_{FC}$ are independently chosen hydrocarbon and fluorocarbon moieties, respectively, and R is an oxygen atom or a carbonyl functional group.

In some embodiments, component (b) may be one or more than one fluorocarbons containing 4 or more carbon atoms, 7 or more fluorine atoms, and that is a liquid at atmospheric pressure and a temperature of 0°C, 10°C, 20°C, 25°C.

In many embodiments, component (b) may be a mixture of one or more than one fluorocarbon of formula (II)

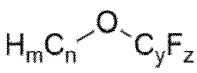 (II),

where $C_nH_m$ and $C_yF_z$ are independently chosen hydrocarbon and fluorocarbon moieties, respectively, and/or one or more than one fluorocarbon of formula (II-a, II-b)

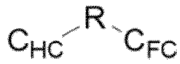 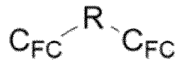

II-a II-b

where $C_{HC}$ and $C_{FC}$ are independently chosen hydrocarbon and fluorocarbon moieties, respectively, and R is an oxygen atom or a carbonyl functional group,

and/or one or more than one fluorocarbons containing 4 or more carbon atoms, 7 or more fluorine atoms, and that is a liquid at atmospheric pressure and a temperature of 0°C, 10°C, 20°C, 25°C.

The ratio by weight of the ester component (a) to the hydrocarbon-fluorocarbon component (b) in the heat transfer fluid often ranges from 50:1 to 1:50, often 49:1 to 1:49, such as 45:1 to 1:45, 30:1 to 1:30, 25:1 to 1:25, 20:1 to 1:20, 12:1 to 1:12, 10:1 to 1:10, 8:1 to 1:8, 5:1 to 1:5, 3:1 to 1:3, 2:1 to 1:2.

While the heat transfer fluid may contain esters other than those of formulas (I-a to I-d) the ester components (I-a to I-d) typically collectively make up more than 50% by weight based on the total weight of all esters in the heat transfer fluid, e.g., at least 60 %, at least 70%, at least 80%, at least 90%, at least 95% or at least 99% by weight of esters in the heat transfer fluid.

In formula (I-a to I-d) of ester component (a), each R may, but need not, be the same. In some embodiments, each R in formula (I-a to I-d) is independently chosen from $C_{3-9}$ alkyl hydrocarbons. In some embodiments, the R groups chosen from $C_{3-9}$ alkyl hydrocarbons are the same.

R as "$C_{3-9}$ alkyl" in formula (I-a to I-d) may be a linear or branched chain alkyl group having the specified number of carbon atoms. Examples of linear alkyl groups include n-propyl, n-butyl, n-pentyl, n-hexyl, n-heptyl, n-octyl, and n-nonyl. Examples of branched alkyl groups include those residues arising from esterifying the polyol with isobutyric acid, 2-methylbutanoic acid, 2-ethylhexanoic acid, 3,5,5-trimethylhexanoic acid, and the like. Examples of linear alkyl and branched alkyl groups also include moieties commonly called isobutyl, isopentyl, isooctyl, isononyl, isodecyl and the like, where the prefix "iso" is understood to refer to mixtures of alkyls such as those derived from an oxo process.

Component (a) may comprise a mixture of ester compounds of formula (I-a to I-d). For example, component (a) may comprise a mixture of neopentylglycol esters (I-a) and pentaerythritol esters (I-c). For example, component (a) may comprise a mixture of pentaerythritol esters (I-c) and dipentaerythritol esters (I-d).

In formula (II) of fluorocarbon component

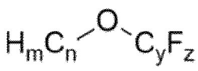 (II),

the carbon chains attached to each side of the oxygen may independently be linear or branched. The number of carbons in each chain (n and y) may, but need not, be the same number. In some embodiments, n = 1 or 2 and y = 3 to 10, as found in fluids sold under the Novec™ and Fluorinert™ brand names (3M).

Component (b) may be a fluorocarbon fluid such as those sold under the Novec™ (3M), Fluorinert™ (3M), Opteon™ (Chemours), Vertrel™ (Chemours), or Galden® (Solvay) brandnames. For example, component (b) may be Novec™ 7000, Novec™ 7100, Novec™ 7200, or Novec™ 7300. For example, component (b) may be Galden® HT55. Component (b) may be a blend of two fluorocarbon fluids. For example, component (b) may be a blend of Novec™ 7000 and Novec™ 7100 or a blend of Novec™ 7200 and Galden® HT55.

Component (b) may comprise a mixture of fluorocarbon compounds (II). For example, component (b) may comprise a mixture of methyl nonafluorobutyl ether and methyl nonafluoroisobutyl ether. For example, component (b) may comprise a mixture of ethyl nonafluorobutyl and ethyl nonafluoroisobutyl ether.

The heat transfer fluid of the present disclosure may also include one or more other base oils, such as diesters, aromatic esters, complex esters, mineral oils, polyalphaolefins, polyalkyleneglycols, phosphate esters, etc. The other base oil(s) and amounts thereof should be chosen to be consistent with the properties suitable for the immersion cooling fluid as described herein. Typically, components (a) and (b) collectively make up more than 50% by weight of the heat transfer fluid. For example, in many embodiments, components (a) and (b) collectively are at least 60%, at least 70%, at least 80%, at least 90%, at least 95%, or at least 99% by weight of the heat transfer fluid.

The heat transfer fluid of the present disclosure may further comprise one or more performance enhancing additives. Examples of such additives include, but are not limited to, antioxidants, metal deactivators, flow additives, corrosion inhibitors, foam inhibitors, demulsifiers, pour point depressants, acid scavengers, and any combination or mixture thereof. Fully-formulated heat transfer fluids typically contain one or more of these performance additives, and often a package of multiple performance additives. Often, one or more performance additives are present at 0.0001 wt% up to 3 wt%, or 0.05 wt% up to 1.5 wt%, or 0.1 wt% up to 1.0 wt%, based on the weight of the heat transfer fluid.

In many embodiments, the heat transfer fluid may consist essentially of the components (a) and (b) and optionally

one or more performance additives. In some embodiments, the heat transfer fluid consists of components (a) and (b) and optionally one or more performance additives.

The polyol esters of the present disclosure, including mixtures thereof, are known or can be prepared by known techniques. For example, trimethylolpropane trivalerate can be prepared by reacting 1 mole of trimethylolpropane with 3 moles of valeric acid. Often, an excess of valeric acid is used to speed up the esterification process. The reactants are mixed at high temperatures and the water of reaction is removed as it is formed. Vacuum stripping of excess valeric acid and, optionally, alumina refining followed by filtration affords the final product. Known processes are described, e.g., in U.S. Patent Nos. 3,562,300, 3,694,382, 6,267,906, 8,865,015. Commercially available polyol esters are available under the Hatcol® brandname.

The components (a) and (b) may be mixed according to any suitable technique for blending such polyol ester and fluorocarbon components. For example, performance enhancing additives may be blended with the polyol ester before adding the fluorocarbon component.

The physical properties of the presently disclosed heat transfer fluid may be adjusted or optimized at least in part based on the chemical structures of the polyol esters (a) and fluorocarbons (b) and/or based on the proportions by weight or volume of the polyol ester component (a) to the fluorocarbon component (b) in the heat transfer fluid.

Typically, the polyol ester component of the heat transfer fluid of the present disclosure has a flash point according to ASTM D92 of ≥ 150 °C, preferably ≥ 170 °C ; a kinematic viscosity measured at 40 °C according to ASTM D445 of less than 400 cSt, preferably ≤ 100 cSt or ≤ 50 cSt, more preferably ≤ 30 cSt; a pour point according to ASTM D5950 of ≤ 0 °C, preferably ≤ -25 °C, more preferably ≤ -30 °C; a dielectric strength according to ASTM D1816 of greater than 25 kV; and a DC resistivity measured at 25 °C according to IEC 60247 of greater than 0.25 GOhm-cm, preferably > 0.5 GOhm-cm, > 1 GOhm-cm, or > 5 GOhm-cm.

Typically, the fluorocarbon component of the heat transfer fluid of the present disclosure does not have a measurable flash point according to ASTM D92; a kinematic viscosity measured at 25 °C according to ASTM D445 of less than 5 cSt, preferably ≤ 3 cSt or ≤ 1 cSt, more preferably ≤ 0.8 cSt; a pour point according to ASTM D5950 of ≤ -25 °C, preferably ≤ -40 °C, more preferably ≤ -50 °C; a dielectric strength according to ASTM D1816 of greater than 25 kV; and a DC resistivity measured at 25 °C according to IEC 60247 of greater than 0.25 GOhm-cm, preferably > 0.5 GOhm-cm, > 1 GOhm-cm, or > 5 GOhm-cm.

For example, in an embodiment, the heat transfer fluid of the present disclosure comprises a 1:1 blend of neopentyl glycol bis(2-ethylhexanoate) and methyl perfluoropropyl ether. The blend has a kinematic viscosity measured at 25 °C according to ASTM D445 of 2.1 cSt; a pour point according to ASTM D5950 of ≤ -65 °C; and a DC resistivity measured at 25 °C according to IEC 60247 of 68 GOhm-cm. Also at 25 °C, the embodied fluid has a density of 1.11 g/mL, specific heat capacity of 1.35 J/g-K, and a thermal conductivity of 0.093 W/m-K.

For example, in an embodiment, the heat transfer fluid of the present disclosure comprises a 1:1 blend of neopentyl glycol bis(2-ethylhexanoate) and Novec™ 7100. The blend has a kinematic viscosity measured at 25 °C according to ASTM D445 of 3.3 cSt; a pour point according to ASTM D5950 of ≤ -65 °C; and a DC resistivity measured at 25 °C according to IEC 60247 of 140 GOhm-cm. Also at 25 °C, the embodied fluid has a density of 1.12 g/mL, specific heat capacity of 1.32 J/g-K, and a thermal conductivity of 0.090 W/m-K

The immersion cooling system of the present disclosure comprises electrical componentry, a heat transfer fluid as described herein, and a reservoir, wherein the electrical componentry is at least partially immersed in the heat transfer fluid within the reservoir, and a circulating system capable of circulating the heat transfer fluid out of the reservoir, through a circulating pipeline of the circulating system, and back into the reservoir.

The immersion cooling system of the present disclosure comprises electrical componentry, a heat transfer fluid as described herein, and a reservoir, wherein the electrical componentry is at least partially immersed in the heat transfer fluid within the reservoir, and a method of cooling the components by transferring heat energy to a condensing system located in the vapor space of the immersion cooling system. The condenser functions to extract heat energy from the volatilized portions of the heat transfer fluid, thereby condensing the gas/vapors and returning them, in a liquid phase, to the reservoir while rejecting heat energy to another medium (e.g., air or a second heat transfer fluid).

Electrical componentry includes any electronics that generate thermal energy in need of dissipation for safe and efficient usage. Examples may include, but are not limited to, batteries, fuel cells, aircraft electronics, computer electronics such as microprocessors, un-interruptable power supplies (UPSs), power electronics (such as IGBTs, SCRs, thyristors, capacitors, diodes, transistors, rectifiers and the like), invertors, DC to DC convertors, battery chargers (e.g., within loading stations or electric vehicle charging points), phase change invertors, electric motors, electric motor controllers, DC to AC invertors, photovoltaic cells, central processing units, graphics processing units, cryptocurrency miners, application-specific integrated circuits (ASICs), and the like.

The system and method of the present disclosure is particularly useful for cooling battery systems, such as those in electric vehicles (including passenger and commercial vehicles), e.g., in electric cars, trucks, buses, industrial trucks (e.g., forklifts and the like), mass transit vehicles (e.g., trains or trams), off-road vehicles (e.g., ATVs, snowmobiles, and mining equipment), and other forms of electric powered transportation.

Typically, electrified transportation is powered by battery modules. A battery module may encompass one or more battery cells arranged or stacked relative to one another. For example, the module can include prismatic, pouch or cylindrical cells. During charging and discharging (use) operations of the battery, heat is typically generated by the battery cells, which can be dissipated by the immersion cooling system. Efficient cooling of the battery via the immersion cooling system allows for fast charge times at high loadings, while maintaining safe conditions and avoiding heat propagation and thermal runaway. Electrical componentry in electric powered transportation also includes electric motors, which can be cooled by the immersion cooling system.

Typically, computers are built from multiple components including, but not limited to, power supplies, motherboards, central processing units (CPU), random access memory (RAM), graphical processing units (GPU), data storage devices (solid state hard drives), networking devices (WiFi, LAN), and interfaces (parallel ports, serial ports). Consumer-grade computers usually contain one multi-core CPU and one GPU. When under high load, these components consume moderate amounts of electrical power (200 - 1000 Watts in total).

Commercial-grade computers which are employed as file servers or web servers may consist of multiple modular computers, each consisting of multiple CPUs and storage devices. Electrical power consumption varies depending on configuration and load, but a two-CPU socket module consumes about 350 W under high load.

Application-specific integrated circuits (ASIC) are chips customized for a particular use. Cryptocurrency miners often consist of many ASIC chips and consume large amounts of electrical power (500 - 3500 Watts).

Cooling of computers (consumer-, commercial-, and application specific-types) via the immersion cooling system allows for efficient operation under high load, while maintaining high performance. In addition immersion cooling reduces or eliminates noise arising from fans and reduces maintenance related to dust buildup.

In accordance with the present disclosure, the electrical componentry is at least partially immersed in the heat transfer fluid within a reservoir. Often, the electrical componentry is substantially immersed or fully immersed in the heat transfer fluid, such as immersing (in the case of a battery module) the battery cell walls, tabs and wiring. In the case of computer immersion cooling, the entire system is often immersed in the heat transfer fluid. In both cases, the reservoir may be any container suitable for holding the heat transfer fluid in which the electrical componentry is immersed. For example, the reservoir may be a container or housing for the electrical componentry, such as a battery module housing or a tank designed for immersing computer equipment.

The immersion cooling system further comprises a circulating system capable of circulating the heat transfer fluid out of the reservoir, through a circulating pipeline of the circulating system, and back into the reservoir. Often, the circulating system includes a pump and a heat exchanger. In operation, for example as shown in FIG. 1, the circulating system may pump heated heat transfer fluid out of the reservoir through a circulating pipeline and through a heat exchanger to cool the heat transfer fluid and pump the cooled heat transfer fluid through a circulating pipeline back into the reservoir. In this manner, during operation of the electrical componentry (which is at least partially immersed in the heat transfer fluid within the reservoir), such as during charging or discharging operations of a battery or during operation of a computer server or cryptomining, the immersion cooling system is operated to allow the heat transfer fluid to absorb heat generated by the electrical componentry, to remove heat transfer fluid that has been heated by the electrical componentry for cooling in the heat exchanger, and to circulate the cooled heat transfer fluid back into the reservoir.

The heat exchanger may be any heat transfer unit capable of cooling the heated heat transfer fluid to a temperature suitable for the particular application. For example, the heat exchanger may use air cooling (liquid to air) or liquid cooling (liquid to liquid). The heat exchanger, for example, may be a shared heat transfer unit with another fluid circuit within the electrical equipment or device, such as a refrigeration/air conditioning circuit in an electric vehicle or data center. The circulation system may flow the heat transfer fluid through multiple heat exchangers, such as air cooling and liquid cooling heat exchangers.

The circulation pipeline of the circulating system may flow the heat transfer fluid to other electrical componentry that generates thermal energy in need of dissipation within the electrical equipment or device. For example, the heat transfer fluid may also be used for immersion cooling of electrical componentry being powered by the battery (e.g., an electric motor) and/or immersion cooling of electrical componentry employed in charging the battery. For example, the heat transfer fluid may be used for immersion cooling of multiple, separate computers or computer components housed in multiple, separate containers. The heated heat transfer fluid flowing out of the container(s) or housing(s) of the various electrical componentry may be cooled in one or more heat exchangers and the cooled heat transfer fluid may be circulated back to the container(s) or housing(s). The reservoirs, containers, heat exchangers, and pumps may be connected in series or parallel configurations.

The circulating system may also include a heat transfer fluid tank to store and/or maintain a volume of heat transfer fluid. For example, cooled heat transfer fluid from a heat exchanger may be pumped into the heat transfer fluid tank and from the heat transfer fluid tank back into the reservoir.

An example of a single-phase liquid immersion cooling system in accordance with the present disclosure is shown in FIG. 1. The electrical componentry and reservoir are enlarged for purposes of illustration. The system comprises electrical componentry 1 (which, in this example, are battery cells of a battery module), a heat transfer fluid 2, and a

reservoir 3. The electrical componentry 1 is at least partially immersed (in FIG. 1, fully immersed) in the heat transfer fluid 2 within the reservoir 3. A circulating system comprising circulating pipeline 4, a heat exchanger 5 and a pump 6 moves heated heat transfer fluid 2 out of the reservoir for cooling in heat exchanger 5 and the cooled heat transfer fluid is circulated back into the reservoir 3. The heat exchanger may be cooled by air 7 or a second heat transfer fluid such as water or a refrigerant.

The depicted flow of the heat transfer fluid 2 over and around the electrical componentry 1 as shown in FIG. 1 is exemplary only. The circulating system may also include a heat transfer fluid tank, additional pumps, piping, valves, and controls, which are not shown in the figure. The electrical componentry may be arranged within the reservoir in any way suitable for the type of electrical componentry and the intended application. Similarly, the flow of heat transfer fluid in and out of the reservoir and the flow through the reservoir may be accomplished in any manner suitable to ensure that the electrical componentry remains at least partially immersed in the heat transfer fluid. For example, the reservoir may include multiple inlets and outlets. The heat transfer fluid may flow from side to side, top to bottom, or from bottom to top of the reservoir or a combination thereof, depending upon the desired orientation of the electrical componentry and the desired fluid flow of the system. The reservoir may include baffles for guiding the flow of heat transfer fluid over and/or around the electrical componentry. The reservoir may also include agitation or stirring to evenly distribute the heat transfer fluid within the container. The reservoir may also contain submersible pumps to control and direct the flow of the heat transfer fluid. As a further example, the heat transfer fluid may enter the reservoir via a spray system, such as being sprayed on the electrical componentry from one or more top inlets of the reservoir.

An example of a two-phase liquid immersion cooling system in accordance with the present disclosure is shown in FIG. 2. The electrical componentry and reservoir are enlarged for purposes of illustration. The system comprises electrical componentry **1** (which, in this example, are computers), a heat transfer fluid **2,** and a reservoir **3.** The electrical componentry **1** is at least partially immersed (in FIG. 2, fully immersed) in the heat transfer fluid **2** within the reservoir **3.** Above the fluid in the reservoir is an enclosed space (vapor or head space) **4** containing a condenser **5.** A second heat transfer fluid **6,** such as water or air, may flow through the condenser **5** to regulate the surface temperature of the condenser. The heat energy generated by the electrical componentry **1** boils or vaporizes low boiling component (b) of the heat transfer fluid **2** producing vapors **7** of component (b) in the head space. When the vapors **7** contact the relatively cooler surface of the condenser **5,** they condense to form a liquid phase **8** of component (b) thereby transferring heat energy to the condenser **5** and its working fluid **6,** if present. Liquid **8** is returned to the heat transfer fluid **2** by dripping (gravity).

The depicted flow of the heat transfer fluid **2** over and around the electrical componentry **1** as shown in FIG. 2 is exemplary only. The immersion cooling system may also include additional fluid reservoirs, pumps, piping, valves, and controls, which are not shown in the figure. The electrical componentry may be arranged within the reservoir in any way suitable for the type of electrical componentry and the intended application. The reservoir may include agitation or stirring to evenly distribute the heat transfer fluid within the container and homogenize its composition. The reservoir may also include baffles for guiding the flow of heat transfer fluid over and/or around the electrical componentry. The reservoir may also contain submersible pumps to control and direct the flow of the heat transfer fluid within the reservoir and between reservoirs. The vapor space and condenser may be designed to collect the condensate in a separate tank and return it to the reservoir at a controlled rate. The condensate may be passed over other electrical components or made to flow through additional piping and heat exchangers before returning to the reservoir. As a further example, the immersion cooling system may include a spray system, such that the heat transfer fluid is sprayed onto the electrical componentry by one or more nozzles inside the reservoir or enclosure.

While the system and method of the present disclosure is particularly useful for cooling of electrical componentry, such as battery modules, the presently disclosed immersion arrangement of the electrical componentry in the heat transfer fluid also allows the fluid to transfer heat to the electrical componentry to provide temperature control in cold environments. For example, the immersion cooling system may be equipped with a heater to heat the heat transfer fluid, where the heat exchanger may operate in a "heating mode." The heated fluid may transfer heat to the immersed electrical componentry to achieve and/or maintain a desired or optimal temperature for the electrical componentry, such as a desired or optimal temperature for battery charging or computer operation.

Also disclosed is a method of cooling electrical componentry comprising at least partially immersing electrical componentry in a heat transfer fluid as described herein, and circulating the heat transfer fluid out of the reservoir, through a circulating pipeline of a circulation system, and back into the reservoir.

Further non-limiting disclosure is provided in the Examples that follow.

## EXAMPLES

### Polyol Ester Components

Polyol esters were made by standard methods. The synthesis of neopentylglycol diheptanoate serves as an example of the general procedure.

Neopentyl glycol (903 g, 8.67 mol), n-heptanoic acid (2598 g, 19.95 mol), and decolorizing carbon (10.5 g) were combined in a glass reactor equipped with an overhead agitator, heating mantle with temperature controller, Dean-Stark trap, and condenser. While sparging with a low flow of nitrogen, the mixture was stirred and heated to 225°C. The water produced as a byproduct of esterification was collected in the trap. Refluxing n-heptanoic acid was allowed to return to the reactor. The reaction phase continued until the hydroxyl value was less than 2.0 mgKOH/g (about 18 hours). The trap was drained and the reaction mixture was cooled to about 180°C. To remove unreacted n-heptanoic acid, a vacuum pump was connected and the pressure of the system was reduced slowly to about 15 Torr. Stripped acid was collected in the trap. When the stripping rate slowed, the temperature of the reaction mixture was increased to 225°C. Stripping continued until the acid value of the crude product was 0.15 mgKOH/g. After cooling to 80°C, alumina (35 g) was added to adsorb residual acid and the resulting mixture was stirred for 1 hour under vacuum. Vacuum filtration through a pad of diatomaceous earth afforded 2627 g of the final product, NPG-nC7 ester, as a nearly colorless viscous liquid having a kinematic viscosity of 1.9 cSt at 100°C.

Other polyol esters were synthesized according to the general procedure described above. Their physical properties are summarized in Table 1.

Table 1. Physical properties of the polyol ester components

| Ester Chemistry | KV40 (cSt) | KV100 (cSt) | Density at 25°C (g/mL) | Pour Point (°C) | Flash Point (°C) |
|---|---|---|---|---|---|
| NPG-nC5 | 3.6 | 1.4 | 0.945 | -67 | 174 |
| NPG-nC7 | 5.9 | 1.9 | 0.922 | -66 | 216 |
| NPG-nC8 | 7.0 | 2.2 | 0.915 | -54 | 210 |
| NPG-2EH | 7.5 | 2.1 | 0.911 | -65 | 185 |
| NPG-iC9 | 13 | 3.1 | 0.914 | -48 | 174 |
| NPG-nC8C10 | 8.3 | 2.5 | 0.911 | -51 | 210 |
| TMP-nC5 | 9.5 | 2.6 | 0.987 | -65 | 204 |
| TMP-nC7 | 14 | 3.4 | 0.952 | -57 | 229 |
| TMP-2EH | 24 | 4.2 | 0.948 | -54 | 221 |
| TMP-iC9 | 47 | 7.1 | 0.933 | -46 | 235 |
| TMP-nC8C10 | 19 | 4.4 | 0.940 | -54 | 254 |
| PE-nC5 | 16 | 3.6 | 1.01 | -62 | 227 |
| PE-nC7 | 21 | 4.6 | 0.981 | -37 | 268 |
| PE-2EH | 44 | 6.2 | 0.958 | +3 | 252 |
| PE-nC8C10 | 29 | 5.8 | 0.960 | -7 | 282 |
| PE-iC9 | 113 | 11 | 0.916 | +29 | 266 |
| PE-2EH/iC9 | 72 | 8.6 | 0.952 | -40 | 266 |
| DiPE-nC5 | 51 | 8.4 | 1.04 | -17 | 276 |
| DiPE-nC5/nC8C10 | 53 | 8.8 | 1.00 | -51 | 282 |
| DiPE-iC9 | 400 | 26 | 0.960 | -15 | 288 |
| KV40 = Kinematic viscosity measured at 40°C.<br>KV100 = Kinematic viscosity measured at 100°C. | | | | | |

Ester nomenclature: Polyol-Alkyl Carboxylic Acid. For example, the ester made according to the general procedure from neopentyl glycol and n-pentanoic acid is denoted as NPG-nC5.

NPG = Neopentyl glycol; TMP = Trimethylolpropane; PE = Pentaerythritol; DiPE = Dipentaerythritol; nC5 = n-Pentanoic acid; nC7 = n-Heptanoic acid; 2EH = 2-Ethylhexanoic acid; nC8C10 = Blend of n-octanoic and n-decanoic acids; iC9 = 3,5,5-Trimethylhexanoic acid (isononanoic acid).

Fluorocarbon Components

The fluorocarbon components were purchased from commercial sources (3M, Sigma-Aldrich, and Fisher Scientific) and used without further purification.

Table 2. Physical properties of the fluorocarbon components

| Name | KV25 (cSt) | Density at 25°C (g/mL) | Pour Point (°C) | Boiling Point (°C) |
|---|---|---|---|---|
| Novec™ 7000 | 0.32 | 1.40 | -122 | 34 |
| Novec™ 7100 | 0.38 | 1.51 | -135 | 61 |
| Novec™ 649 | 0.40 | 1.60 | -108 | 49 |
| Novec™ 7200 | 0.41 | 1.42 | -138 | 76 |
| Novec™ 7300 | 0.71 | 1.66 | -38 | 98 |
| Novec™ 7500 | 0.77 | 1.61 | -100 | 128 |
| Novec™ 7700 | 2.52 | 1.80 | -50 | 167 |
| KV25 = Kinematic viscosity measured at 25°C. | | | | |

Compatibility Testing

The polyol ester and fluorocarbon components must be compatible or miscible with each other. That is, they should remain as a single liquid phase over the operating temperature range of the thermal management system.

To determine which combinations of polyol esters and fluorocarbons are compatible with each other, mixtures (1:9, 1:1, 9:1 by volume of fluorocarbon: polyol ester) were prepared in test tubes at room temperature (20°C). After vigorously shaking the test tubes to blend the components, the mixtures were visually examined. Those combinations that formed a single uniform liquid phase were judged to be compatible. Mixtures that appeared to form two separate liquid phases, as evidenced by cloudiness, emulsified droplets, or two distinct liquid layers, were judged to be incompatible. The results are summarized in Table 3.

Table 3. Compatibility of ester and fluorocarbon components.

| Volume Ratio: | 1:9 FC/Ester | | | 1:1 FC/Ester | | | | 9:1 FC/Ester | | |
|---|---|---|---|---|---|---|---|---|---|---|
| Ester | 7000 | 7100 | 7300 | 7000 | 7100 | 7300 | 649 | 7000 | 7100 | 7300 |
| NPG-nC5 | Y | Y | Y | Y | Y | N | N/A | Y | Y | Y |
| NPG-nC7 | Y | Y | Y | Y | Y | N | N/A | Y | Y | N |
| NPG-nC8 | Y | Y | N | Y | N | N | N | Y | Y | N |
| NPG-2EH | Y | Y | Y | Y | Y | N | N | Y | Y | N |
| NPG-iC9 | Y | Y | Y | Y | Y | N | N/A | Y | Y | Y |
| NPG-nC8C10 | Y | Y | N | Y | N | N | N | Y | N | N |
| TMP-nC5 | Y | Y | N | Y | Y | N | N | Y | Y | N |
| TMP-nC7 | Y | Y | N | N | N | N | N/A | Y | N | N |
| TMP-2EH | Y | Y | N | Y | N | N | N/A | Y | Y | N |
| TMP-iC9 | Y | Y | N | Y | Y | N | N | Y | Y | N |
| TMP-nC8C10 | Y | Y | N | N | N | N | N | N | N | N |
| PE-nC5 | Y | Y | N | Y | N | N | N | Y | N | N |
| PE-nC7 | Y | N | N | N | N | N | N/A | N | N | N |
| PE-2EH | Y | Y | N | N | N | N | N | Y | N | N |
| PE-iC9 | Y | Y | N | Y | N | N | N/A | Y | Y | N |
| PE-nC8C10 | Y | N | N | N | N | N | N/A | N | N | N |

(continued)

| Volume Ratio: | 1:9 FC/Ester | | | 1:1 FC/Ester | | | | 9:1 FC/Ester | | |
|---|---|---|---|---|---|---|---|---|---|---|
| Ester | 7000 | 7100 | 7300 | 7000 | 7100 | 7300 | 649 | 7000 | 7100 | 7300 |
| PE-2EH/iC9 | Y | Y | N | N | N | N | N | Y | N | N |
| DiPE-nC5 | Y | N | N | N | N | N | N/A | N | N | N |
| DiPE-nC5/nC8C10 | Y | Y | N | N | N | N | N | N | N | N |
| DiPE-iC9 | Y | Y | N | N | N | N | N | Y | N | N |
| Y = Compatible (forms a single, uniform liquid phase at 20°C)<br>N = Not compatible (phase separation observed at 20°C)<br>N/A = No data yet | | | | | | | | | | |

Even if a mixture of components (a) and (b) forms a single liquid phase near room temperature (20°C), the blend could phase separate upon cooling and/or heating. In many cases there is a temperature $T_L$ below which the fluorocarbon and polyol ester undergo phase separation and there is also a temperature $T_H$ above which they undergo phase separation. The temperature range over which the blended fluid exists as a single, uniform liquid phase is called its "miscibility temperature window," defined as $T_L$ to $T_H$. In general, a useful heat transfer fluid has a miscibility temperature window covering the range of operating temperatures the bulk fluid will experience during service. The heat transfer fluids of the present disclosure have $T_L$ less than about 20°C, often less than 10°C or less than 0°C and $T_H$ greater than about 30°C, often greater than about 50°C or greater than 70°C. Importantly, in some cases, $T_H$ is not observed because it is above the boiling point of one component of the mixture.

To determine useful heat transfer fluid compositions and their miscibility temperature windows, blends of compatible polyol esters and fluorocarbons were sealed in glass tubes and placed in a temperature controlled chamber. To determine $T_L$, the appearance of the samples was recorded while cooling the chamber very slowly from 25°C to -60°C. If phase separation occurred, it was denoted as $T_L$ for that particular sample. After reaching -60°C, the temperature of the chamber was returned to 25°C and the sample tubes were vigorously shaken to thoroughly mix their contents. Next, the appearance of the samples was recorded while warming the chamber very slowly from 25°C to 70°C. If phase separation occurred, it was denoted as $T_H$ for that particular sample. Tables 4 and 5 summarize the data collected for several inventive examples.

Table 4. Miscibility temperature windows where component (b) is Novec™ 7000.

| | | NPG -nC8 | NPG -2EH | NPG nC8C10 | TMP -nC5 | TMP -iC9 | PE -nC5 |
|---|---|---|---|---|---|---|---|
| Ester (Vol%) | Novec™ 7000 (Vol%) | $T_L$ / $T_H$ (°C) | $T_L$ / $T_H$ (°C) | $T_L$ / $T_H$ (°C) | $T_L$/$T_H$ (°C) | $T_L$ / $T_H$ (°C) | $T_L$/$T_H$ (°C) |
| 90 | 10 | -49 / >70 | -41 / >70 | -44 / >70 | -70 / >70 | -27 / >70 | -36 / >70 |
| 75 | 25 | -19 / >70 | -40 / >70 | -2 / >70 | -36 / >70 | -18 / >70 | 15/>70 |
| 50 | 50 | 7 / >70 | -45 / >70 | * | -18 / >70 | -7 / >70 | 16/67 |
| 25 | 75 | 1 / >70 | -46 / >70 | 18 / >70 | -22 / >70 | -4 / >70 | 15 / >70 |
| 10 | 90 | -5 / >70 | -46 / >70 | 15 / >70 | -40 / >70 | -16 / >70 | 20 / >70 |

Table 5. Miscibility temperature windows where component (b) is Novec™ 7100.

| | | NPG -nC8 | NPG -2EH | NPG nC8C10 | TMP -nC5 | TMP -iC9 | PE -nC5 |
|---|---|---|---|---|---|---|---|
| Ester (Vol%) | Novec™ 7100 (Vol%) | $T_L$/$T_H$ (°C) | $T_L$/$T_H$ (°C) | $T_L$/$T_H$ (°C) | $T_L$/$T_H$ (°C) | $T_L$/$T_H$ (°C) | $T_L$/$T_H$ (°C) |
| 90 | 10 | -10/43 | -36 / >70 | -14 / >70 | -18 / >70 | 15/46 | * |
| 75 | 25 | 14 / >70 | -36 / >70 | * | 0 / >70 | * | * |
| 50 | 50 | * | -22 / >70 | * | 9 / >70 | 17 / > 70 | * |

(continued)

| | | NPG -nC8 | NPG -2EH | NPG nC8C10 | TMP -nC5 | TMP -iC9 | PE -nC5 |
|---|---|---|---|---|---|---|---|
| Ester (Vol%) | Novec™ 7100 (Vol%) | $T_L/T_H$ (°C) | $T_L/T_H$ (°C) | $T_L/T_H$ (°C) | $T_L/T_H$ (°C) | $T_L/T_H$ (°C) | $T_L/T_H$ (°C) |
| 25 | 75 | 18/21 | -23 / >70 | 23 / >70 | 13/>70 | * | * |
| 10 | 90 | 4 / > 70 | -25 / >70 | * | -10 / >70 | 3 / >70 | * |

In Tables 4 and 5: An asterisk (*) indicates that the mixture was cloudy or phase separated at the starting temperature of 25°C. $T_H$ noted as ">70" means that phase separation was not observed, even at the highest temperature tested. Due to the samples being prepared in sealed glass tubes capable of withstanding high pressure, boiling was not observed.

Characterization Procedures

Heat transfer fluids in accordance with the present disclosure were evaluated to determine their viscosity, density, thermal conductivity, heat capacity, and DC resistivity.
The viscosity and density of the disclosed heat transfer fluids were measured as a function of temperature using a temperature controlled circulation loop apparatus comprising a fluid reservoir, pump, mass flow/density meter, sliding piston viscometers, and a pressure transducer. Thermocouples were located at multiple locations in the loop as well as directly in the mass flow meter and viscometers. The design of the loop allows for continuous circulation of the liquid mixture through the viscometers and flow/density meter and provides agitation to ensure good mixing of the fluid components.
Thermal conductivity and heat capacity were measured according to ASTM D7896 with a Thermtest Transient Hot Wire (THW-L1) Liquid Thermal Conductivity Meter.
A figure of merit (FOM) was calculated as follows.

$$\mathrm{FOM} = \frac{k C_P \rho}{\eta} \times 1000$$

Here, k is thermal conductivity (W/m-K), $C_P$ is specific heat capacity (J/g-K), $\rho$ is density (g/mL); $\eta$ is dynamic viscosity (cP).
DC resistivity was measured according to IEC 60247 with a Baur DTL-C Oil Tester.

Table 6. Thermophysical Properties

| | Temp (°C) | NPG-2EH | 1:1 NPG-2EH/Novec™ 7000 | 1:1 NPG-2EH/Novec™ 7100 |
|---|---|---|---|---|
| Viscosity | 0 | 43.33 | 4.79 | 8.50 |
| (cP) | 10 | 26.07 | 3.46 | 5.83 |
| | 20 | 16.52 | 2.60 | 4.21 |
| | 30 | 10.97 | 2.03 | 3.16 |
| Density (g/mL) | 0 | 0.9467 | 1.1440 | 1.1463 |
| | 10 | 0.9403 | 1.1311 | 1.1347 |
| | 20 | 0.9334 | 1.1177 | 1.1230 |
| | 30 | 0.9260 | 1.1036 | 1.1111 |
| Thermal Conductivity (W/m-K) | 0 | 0.1285 | 0.0965 | 0.0938 |
| | 10 | 0.1273 | 0.0951 | 0.0923 |
| | 20 | 0.1261 | 0.0936 | 0.0908 |
| | 30 | 0.1249 | 0.0921 | 0.0893 |

(continued)

| | Temp (°C) | NPG-2EH | 1:1 NPG-2EH/Novec™ 7000 | 1:1 NPG-2EH/Novec™ 7100 |
|---|---|---|---|---|
| Heat Capacity (J/g-K) | 0 | 1.815 | 1.288 | 1.269 |
| | 10 | 1.846 | 1.310 | 1.289 |
| | 20 | 1.877 | 1.334 | 1.309 |
| | 30 | 1.911 | 1.359 | 1.330 |
| FOM | 0 | 5.097 | 29.71 | 16.05 |
| | 10 | 8.474 | 40.75 | 23.14 |
| | 20 | 13.38 | 53.56 | 31.72 |
| | 30 | 20.14 | 68.00 | 41.69 |

As shown in Table 6 above, the heat transfer fluids for immersion cooling of electrical componentry, and immersion cooling systems employing the heat transfer fluid, in accordance with the present disclosure, have many benefits. For example, thermal conductivity indicates how fast the fluid may carry heat away from a hot surface. Thus, having a higher thermal conductivity is more beneficial. The heat transfer fluids of the present disclosure have higher thermal conductivity when compared to fluorocarbons alone. In addition, the heat transfer fluids of the present disclosure have lower density when compared to fluorocarbons alone, lowering the overall weight of the heat transfer fluid. Further, the heat transfer fluids of the present disclosure are more environmentally friendly than fluorocarbons alone because esters may be biodegradable. Moreover, when compared to esters alone, the heat transfer fluids of the present disclosure have lower viscosity but higher density and FOM. Heat transfer fluids in accordance with the present disclosure have a higher heat capacity when compared to fluorocarbons alone.

This allows for the heat transfer fluids of the present invention to absorb more heat than fluorocarbons alone, without changing the overall temperature of the heat transfer fluid. Rates of heat transfer from the relatively hotter electrical componentry to the relatively cooler fluid are proportional to the temperature difference between the two materials. Therefore, increased heat capacity of the fluid facilitates cooling of the componentry by maintaining the driving force (delta T) for energy transfer. This may be beneficial during transient heat loads during which sudden increases in temperature of the electrical components being cooled by the heat transfer fluid occur but subside over time.

## Claims

1. A heat transfer fluid for immersion cooling of electrical componentry comprising

(a) one or more than one polyol ester of formula (I)

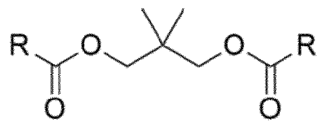

I-a

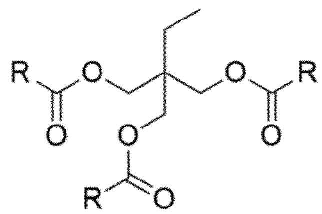

I-b

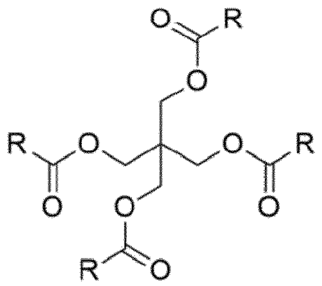

I-c

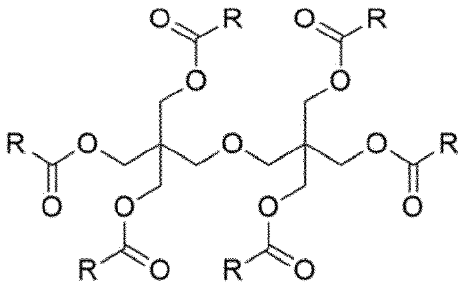

I-d

where each R is independently $C_{3-9}$ alkyl, and
(b) one or more than one fluorocarbon fluid of formula (II)

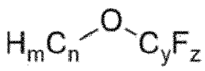
(II),

wherein $C_nH_m$ and $C_yF_z$ are independently chosen hydrocarbon and fluorocarbon moieties, respectively, or one or more than one fluorocarbon of formula (II-a, II-b)

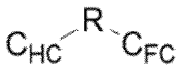

II-a

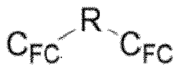

II-b

wherein $C_{HC}$ and $C_{FC}$ are independently chosen hydrocarbon and fluorocarbon moieties, respectively, and R is an oxygen atom or a carbonyl functional group, or
one or more than one fluorocarbons containing 4 or more carbon atoms, 7 or more fluorine atoms, and that is a liquid at atmospheric pressure and a temperature of 0°C, 10°C, 20°C, 25°C.

**2.** The heat transfer fluid of claim 1, wherein the ratio by weight of the polyol ester component (a) to the fluorocarbon component (b) is from 20:1 to 1:20, preferably from 10:1 to 1:10.

**3.** The heat transfer fluid of claim 1, wherein component (b) comprises one or more than one fluorocarbons containing 4 or more carbon atoms, 7 or more fluorine atoms, and that is a liquid at atmospheric pressure and a temperature of 0°C, 10°C, 20°C, 25°C.

**4.** The heat transfer fluid of claim 1, wherein component (b) comprises one or more fluorocarbons of formula (II).

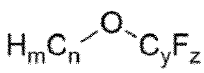
(II)

where $C_nH_m$ and $C_yF_z$ are independently chosen hydrocarbon and fluorocarbon moieties, respectively.

**5.** The heat transfer fluid of any one of the preceding claims, wherein the polyol ester components (a) and fluorocarbon components (b) collectively make up at least 70% by weight of the heat transfer fluid, preferably at least 90% by weight of the heat transfer fluid.

**6.** An immersion cooling system comprising

electrical componentry, preferably electrical componentry comprising a computer, more preferably comprising a computer which is a cryptocurrency miner,
a heat transfer fluid according to any one of claims 1-7, and
a reservoir, wherein the electrical componentry is at least partially immersed in the heat transfer fluid within the

reservoir, and
a circulating system capable of circulating the heat transfer fluid out of the reservoir, through a circulating pipeline of the circulating system, and back into the reservoir, preferably the circulating system comprising a pump and a heat exchanger, wherein the circulating system optionally comprises a heat transfer fluid tank.

**7.** An immersion cooling system comprising

electrical componentry, preferably electrical componentry comprising a computer,
a heat transfer fluid according to any one of claims 1-7, and
a reservoir, wherein the electrical componentry is at least partially immersed in the heat transfer fluid within the reservoir, and
a vapor space where vapors of component (b) are condensed and the resulting liquid flows back into the reservoir.

**8.** The immersion cooling system of claim 7, wherein the electrical componentry comprises a battery, preferably wherein the battery is a battery module for an electric vehicle.

**9.**

**10.** A method of cooling electrical componentry comprising

providing an immersion cooling system comprising electrical componentry, preferably electrical componentry comprising a battery, more preferably comprising a battery which is a battery module for an electric vehicle, a heat transfer fluid according to any one of claims 1-7, and a reservoir, wherein the electrical componentry is at least partially immersed in the heat transfer fluid within the reservoir, and
circulating the heat transfer fluid out of the reservoir, through a circulating pipeline of a circulating system, and back into the reservoir.

**11.** The method of claim 10, wherein the circulating system comprises a pump and a heat exchanger, and the step of circulating the heat transfer fluid comprises pumping the heat transfer fluid out of the reservoir through a circulating pipeline, through the heat exchanger, and back into the reservoir.

**12.** The method of claim 11, wherein the circulating system further comprises a heat transfer fluid tank, and the heat transfer fluid flowing through the heat exchanger is pumped into the heat transfer fluid tank and from the heat transfer fluid tank back into the reservoir.

**13.** A method of cooling electrical componentry comprising

providing an immersion cooling system comprising electrical componentry, preferably electrical componentry comprising a computer, more preferably comprising a computer which is a cryptocurrency miner, a heat transfer fluid according to any one of claims 1-7, and a reservoir, wherein the electrical componentry is at least partially immersed in the heat transfer fluid within the reservoir, and
condensing vapors of the heat transfer fluid, or one of its components, and
returning the condensate to the reservoir.

**14.** The method of claim 13, wherein the system comprises a condenser and the step of condensing vapors of the heat transfer fluid, or one of its components, and returning the condensate to the reservoir.

**15.** The method of claim 14, wherein the system further comprises a heat transfer fluid tank, and the condensed heat transfer fluid flowing from the condenser is collected in the heat transfer fluid tank and pumped from the heat transfer fluid tank back into the reservoir.

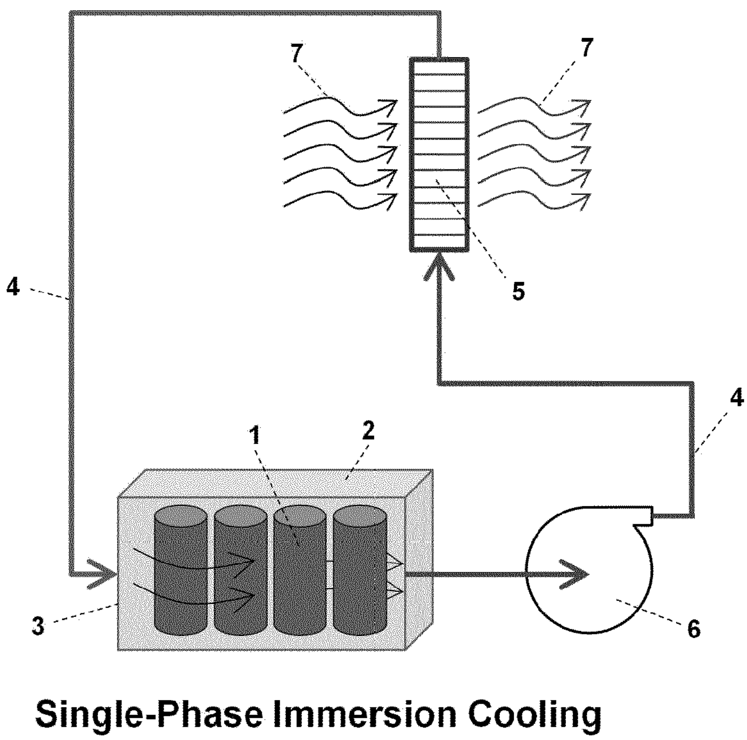
7
7
5
4
4
1
2
3
6
Single-Phase Immersion Cooling

FIG. 1

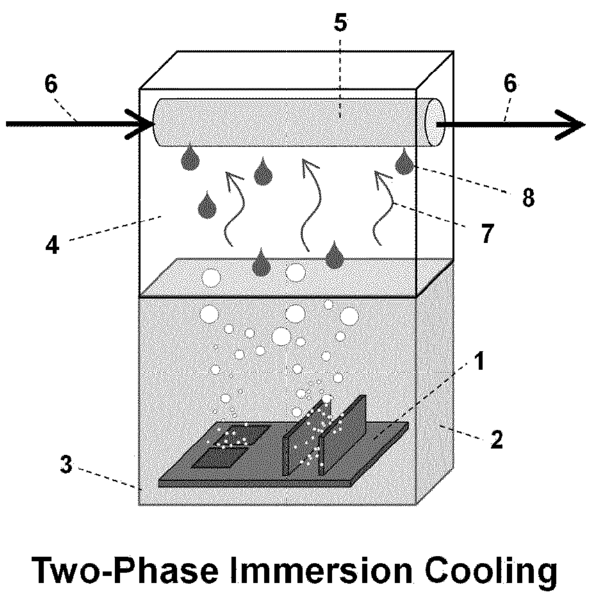
5
6
6
8
4
7
1
2
3
Two-Phase Immersion Cooling

FIG. 2

Europäisches Patentamt
European Patent Office
Office européen des brevets

# EUROPEAN SEARCH REPORT

Application Number
EP 23 21 8020

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/369680 A1 (GARRAIT DOMINIQUE [FR] ET AL) 16 November 2023 (2023-11-16) * paragraphs [0001], [0015], [0025], [0059], [0151] - [0157], [0196]; figures * | 1-15 | INV. C09K5/10 H01M10/613 H01M10/625 |
| A | WO 2013/043311 A1 (DU PONT [US]; QIU WEIMING [US]; BROWN PETER A [US]) 28 March 2013 (2013-03-28) * claim 1 * | 1-15 | |

TECHNICAL FIELDS SEARCHED (IPC)
C09K
H01M

The present search report has been drawn up for all claims

1

| Place of search | Date of completion of the search | Examiner |
|---|---|---|
| The Hague | 30 May 2024 | Martinez Marcos, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 21 8020

This annex lists the patent family members relating to the patent documents cited in the above-mentioned European search report. The members are as contained in the European Patent Office EDP file on
The European Patent Office is in no way liable for these particulars which are merely given for the purpose of information.

30-05-2024

| Patent document cited in search report | Publication date | Patent family member(s) | Publication date |
|---|---|---|---|
| US 2023369680 A1 | 16-11-2023 | CN 116323272 A | 23-06-2023 |
| | | EP 4229144 A1 | 23-08-2023 |
| | | FR 3115289 A1 | 22-04-2022 |
| | | FR 3115290 A1 | 22-04-2022 |
| | | JP 2023546444 A | 02-11-2023 |
| | | US 2023369680 A1 | 16-11-2023 |
| | | WO 2022084600 A1 | 28-04-2022 |
| WO 2013043311 A1 | 28-03-2013 | CN 103827979 A | 28-05-2014 |
| | | EP 2758969 A1 | 30-07-2014 |
| | | JP 2014528150 A | 23-10-2014 |
| | | WO 2013043311 A1 | 28-03-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2022084599 A1
- CN 114106787 A
- US 20170325355 A1
- US 20180233791 A1
- US 3562300 A
- US 3694382 A
- US 6267906 B
- US 8865015 B